# EUROPEAN PATENT APPLICATION

(11) **EP 2 743 882 A1**
(43) Date of publication of application: **18.06.2014**
(21) Application number: 13193796.3
(22) Date of filing: 21.11.2013
(51) Int. Cl.: G06Q 50/00

(54) **Unified social graph**

(30) Priority: 13.12.2012 US 201213713851
(71) Applicant: Gface GmbH, 60322 Frankfurt/Main (DE)
(72) Inventor: Yerli, Cevat, 60314 Frankfurt/Main (DE)
(74) Representative: Schmidt, Steffen

(57) **Abstract**

A unified social graph for representing online content items of an online service is disclosed, such as online and social media and representations of users and groups of users. The social graph comprises a plurality of nodes, each representing one online content item, a plurality of edges, each connecting two nodes of the plurality of nodes and each indicating a relationship between two online content items represented by the two nodes, and a unified interface configured to allow access to the plurality of nodes and, for a node representing an online content item, to allow pushing data related to the online content via the node to connected nodes, and to allow pulling data related to further online content via the node from connected nodes representing the further online content. Furthermore, a system hosting an online service and a method for distributing data related to online content are disclosed.

## Description

### TECHNICAL FIELD

The present disclosure relates to representing content of an online service and a system hosting an online service.

### BACKGROUND

Social networks typically enable a plurality of users to share media and other content and to perform activities provided by the social network. The social network may track the activities performed by individual users and may publish some of the tracked information; for example, activities designated by a user as open to public viewing may be published in a profile of the respective user. Hence, other users of the social network visiting the profile of the user may retrieve the information about current activities of the user. This data published by the social network may also be searched by other users. Yet, the data available for searching by other users throughout the social network is limited to the information published by the social network. Furthermore, users of social networks have a limited control over the distribution of the information and access to the information by other users.

### SUMMARY

The present disclosure relates to a social graph for representing online content of an online service and a system hosting an online service. Moreover, the present disclosure relates to a method for distributing data related to online content of an online service. Described herein are embodiments that improve the presentation and distribution of data in online service, and/or provide relevant data to other users of the online service.

Described herein is a social graph for representing online content of an online service and a method for distributing data related to online content of an online service. Furthermore, a system hosting an online service is defined.

A first aspect of the present disclosure provides a social graph for representing online content of an online service, wherein the social graph comprises a plurality of nodes, each representing one online content item of the online service, a plurality of edges, each connecting two nodes of the plurality of nodes and each indicating a relationship between two online content items represented by the two nodes, and a unified interface to access the plurality of nodes. For a node representing an online content item, the unified interface is configured to push data related to the online content item via the node to connected nodes. Furthermore, for a node representing an online content item, the unified interface is configured to pull data related to further online content via the node from connected nodes representing further online content.

Online content as used throughout this description refers to any kind of content provided and managed by the online service, such as any kind of representations of objects and subjects of the online service. In particular, online content may refer to any kind of online or social media, such as audio and video data, games, applications, blogs, comments, playlists, activities, chats, news, messages, communication media, TV shows, pictures and other image data, to name a few. Furthermore, online content may also refer to representations of users, groups of users and other subject entities of the online service, including user profiles and other personal data. Each online content item may be provided in a data structure such as a container or "seed," which may be used to represent the online content throughout the online service, enabling a unified management and handling of the online content.

The social graph, which may be stored in a computer memory and may be accessed by a processing component or a computing device hosting the online service, may be created and maintained by the online service based on the current number of online content items and their relevance, for example, based on interactions of users with media content, other users, and further online content. Accordingly, each time a new online content item is registered with the online service, a node representing the new online content item may be added to the social graph. Thereafter, based on interactions of users with the online content item, the node may be connected with further nodes of the social graph representing other online content of the online service, for example, the nodes representing the users interacting with the online content.

Each node may include a link to data related to the online content represented by the node, for example, individual data provided by a user and stored within a profile of the user, data related to activities of the user within the online service, as well as any other data, which are generated by the user within the online service due to any kind of interaction of the user, any performance of the user, or any behavior of the user related to the online service. For example, the user may utilize the online service to receive online content provided by another user. Such activity may generate data related to viewing of the online content, as well as data indicating the particular online content. The unified interface of the social graph may be used by the online service to push at least some of the data related to the user via the node representing the user, the online content, or both to some or all connected nodes, thereby providing the data to other users, which have a certain relationship with the user or the online content as indicated by the edges of the social graph. Also, the unified interface may be accessed by the user to explicitly push data related to the user via the unified interface to other connected users. Accordingly, these connected users can be automatically notified by the online service or by the user via pushed data.

Furthermore, the unified interface may be used by the online service to pull data related to further online content, which data could be of interest for a user and which may not have been published within the online service. For example, the online service may only push some data relating to an online content item via the unified interface and maintain the remaining data as unpublished, implicit data of the online content item. The unified interface may be used to retrieve at least some of the remaining data by pulling the data via the unified interface. Hence, a user of the online service may collect explicit data of other online content that have been pushed to the user via the unified interface, and may further enhance the data by pulling implicit data related to further online content via the unified interface.

The social graph according to the present disclosure enables a unified distribution of data related to online content of an online service to other online content of the online service based on pushing of explicit data related to online content and pulling of implicit data related to further online content via the respective nodes of the social graph. Both pushing and pulling of the data are based on relationships between online content items, which are indicated by the edges of the social graph. The social graph improves the distribution of user- and media-related data in online services by providing a unified distribution approach for explicit and implicit data, which is directed by relationships defined between users and other online content of the online service. Hence, users have full control over distribution of data. The unified approach further allows for automatically providing pushed data, such as data related to activities published within the online service, as well as obtaining implicit data by pulling further data, which generally is not published by the online service to other users and other online content. Accordingly, the social graph enables fast retrieval of relevant data for a user originating from other online content of the online service.

According to one embodiment, the unified interface includes a push interface for pushing data and a pull interface for pulling data. Based on the layout and access restrictions of the online service, the push interface may be, for example, only accessible by the online service or respective processing components. For example, an engine of the online service may automatically trigger the push interface to provide any new data related to online content to connected users. However, a user may also control pushing of the data and may explicitly initiate a push of the most current data. The pull interface may be accessible by the online service or respective processing components, as well as components and modules of the online service directly associated with a user, such that the user is enabled to retrieve data related to further connected online content of the online service by pulling.

In another embodiment, the unified interface is further configured to receive a search request related to a user, to determine a node representing the user, to collect data pushed to the node from other nodes, to pull data via the node from other nodes, and to combine the collected pushed data and the pulled data based on the search request. Furthermore, the search request may include one or more tags, such that the collected pushed data and the pulled data are matched with the one or more tags during combining of the data. The user may, for example, formulate a search directed at a particular interest of the user. For example, the user may want to retrieve data of connected users directed at a certain activity or online content. The user may formulate a search request indicating features of the activity and/or of the online content. The online service may thereafter search all data previously pushed to the user. Furthermore, the online service may also directly pull any further data via the node from other nodes. Both the collected pushed data and the retrieved pulled data may be combined and further analyzed based on the search request. For example, the data may be matched with the one or more tags. Also, the search request may be directly provided to the unified interface and used during pulling of the data, such that only data matching the search request will be pulled from other nodes.

In order to further improve control over distribution of data related to online content, according to one embodiment, data pulled via an edge are restricted based on a relationship indicated by the edge. The relationships between online content items may be classified according to a plurality of classes or types, each indicating a particular relationship between the online content items, such as relationships between users classified as friends, buddies, family, associates, and other classes and types suitable to characterize online and/or real relationships between users of the online service. Accordingly, the distribution of pushed data and of the data pulled from other users may be restricted by certain relationships indicated by the respective edges. For example, a user may specify that data will be pushed to all connected users of a certain class or type, and that only friends of the user or users of another class or type will be allowed to pull data related to the user. Restricting the distribution of pulled data and/or pushed data via the relationships indicated by edges results in a fast processing of the data request since the pulling and pushing of data may be immediately terminated whenever an edge is encountered that does not fulfil the access restrictions.

According to another embodiment, the social graph comprises privacy settings associated with at least one node, wherein data pulled from a node are restricted based on privacy settings of the node. The privacy settings may be directed at relationships, groups of users, individual users, and any combination of relationships, groups of users, and individual users suitable to restrict the retrieval of pulled data. Also, the privacy settings may define the kind of data which is allowed or restricted to be pushed and/or pulled from the respective node. Accordingly, privacy settings may also be used to restrict the distribution of pushed data. Using privacy settings in nodes improves the control over distribution and retrieval of user-related data by enabling the user to define detailed rules, permissions, and restrictions. In combination, restrictions defined by edges and privacy settings defined by nodes may be used to directly terminate pulling and/or pushing of data using edge information in a first step and further refine the pulling and/or pushing of the data using node information in a second step. Hence, the unified interface may use relationships and privacy settings to effectively control, restrict, and/or allow distribution of pushed data and retrieval of pulled data.

According to one embodiment, the data related to an online content are indicative of an activity of a user provided by the online service. The user may, for example, view media content, such as by watching a video stream, or participate in a game, or perform any other activity provided by the online service. Correspondingly, the data may include an indication of the user, an indication of the activity, and/or an indication of the particular media content. In addition, during execution of the activity, the activity may signal to the online service a certain performance of the user, such as a game score, which may be tracked by the online service as implicit or explicit data related to the user.

In general, an undirected graph has only undirected edges, a directed graph has only directed edges, and a mixed graph has both directed and undirected edges. Depending on implementation, social graphs described herein may be undirected graphs, directed graphs, or mixed graphs. Directed edges in described embodiments enable a representation of a one-directional relationship between two online content items represented by two nodes connected via the directed edge. For example, a first user may define a second user as a friend; however, the second user may not define the relation at all. Hence, the social graph may only include a directed edge between the first user and the second user. Based on the direction of the edge, only data from the first user may be automatically pushed to the second user and no data of the second user may be pushed to the first user. Also, since the edge between the first user and the second user is a directed edge, the first user may not be able to pull data from the second user. As soon as the second user also defines a relationship with the first user within the online service, a corresponding directed edge may be added to the social graph enabling pulling of data by the first user from the second user according to respective restrictions and/or privacy settings. In a mixed graph or an undirected graph, if both users define the same relationship with the other user, an undirected edge may be inserted between the two nodes.

According to another aspect of the present disclosure, a system hosting an online service is provided, wherein the system comprises a social graph according to an embodiment of the present disclosure, to represent online content of the online service, and a processing component to maintain the social graph.

In particular, the social graph may comprise a plurality of nodes each representing one online content item of the online service, a plurality of edges each connecting two nodes of the plurality of nodes and each indicating a relationship between two online content items represented by the two nodes, and a unified interface configured to allow access to the plurality of nodes and, for a node representing an online content, to allow pushing of data related to the online content via the node to connected nodes, and to allow pulling of data related to further online content via the node from connected nodes representing the further online content. The system may be an online system, which may be implemented on one or more computing devices that may be remote or local devices linked via a network. In addition, the users of the online service may each utilize a client device or a terminal to connect with at least one of the computing devices of the online system via a network. The social graph may, for example, be stored in a memory of one of the computing devices, which may be a dedicated processing device, such as a device that implements a database (e.g., a graph database). Furthermore, the computing device storing the social graph may include a processing component of the system, which may be configured to access the unified interface of the social graph in order to push and pull data related to users.

According to an embodiment, the system further includes means for automatically recording a trace of data related to one or more activities of a user of the online service in response to performing the one or more activities by the user. Actions and activities of users may be monitored and tracked by the online service, for example, on the computing device hosting the online service to which the respective user is connected. The actions and activities may be recorded in the trace and at least some of the data may be provided to the processing component, which may directly distribute and provide at least some of the data via the social graph to other online content items, such as other users. The system may include instances of said means for each online user on each computing device. As soon as a user connects with one of the computing devices, another instance of said means may be created and configured according to user settings and privacy settings as previously defined by the user or pre-set by the online service. In order to distribute at least some of the data, said means may be connected to the processing component. As soon as an online user performs a certain activity via the online service, the respective means may record the trace of data, for example, by appending a new data set related to the current activity to previously recorded data sets. The trace of data may include explicit data, which may be published by the online service, and implicit data, which may be stored with regard to the user and provided to other users upon request, for example, by pulling the data.

According to an embodiment, at least some data of the trace are automatically pushed by the processing component to other users via the social graph and at least some data of the trace are pulled by the processing component via the social graph in response to a request of another user. Either the means for automatically recording the trace may directly pass at least some of the data to the processing component, or the processing component may trigger the respective means for the at least some data in order to automatically push the data via the unified interface. The processing component may access the social graph at a node related to the user and may push the data via the node to other connected nodes related to other users. Accordingly, a module or component of the online service related to the user may connect to the processing component and submit a request for data to the processing component. The processing component may access the social graph at the node related to the user and may pull the data via the node from the other connected nodes related to the other users. For example, the request may include a search request, and the processing component may determine a node representing the user, collect the data pushed to the node from other nodes, and pull data via the node from other nodes. Furthermore, the processing component may combine the collected pushed data and the pulled data and further filter the combined data based on the search request, for example, by matching the combined data with one or more tags of the search request.

According to another aspect, a method for distributing data related to online content of an online service is provided, wherein relationships between online content items of the online service are presented by the social graph, comprising a plurality of nodes, each representing an online content item of the online service, and a plurality of edges, each connecting two nodes of the plurality of nodes and each indicating a relationship between the two online content items represented by the two nodes. The method includes the steps of pushing of data related to an online content item via a node representing the online content to connected nodes representing other users, and pulling of data related to further online content via a node from connected nodes representing the further online content.

The method greatly improves the distribution of data by enabling an explicit pushing of data as well as an implicit pulling of respective data via nodes representing online content. Accordingly, data related to an online content item, such as explicit data, may be pushed via the node representing the online content to other nodes, where it may be collected and provided to respective users. In addition, each user, such as the user receiving the pushed data, may pull further data, such as implicit data, via the node representing the user from connected nodes representing further online content. Hence, the user will explicitly receive pushed data and may implicitly obtain further data related to other online content via pulling. Thereby, each user may know and control which data are distributed to which other users. Furthermore, the unified approach improves the distribution and retrieval of data related to online content of an online service.

According to an embodiment, the method further includes receiving a search request related to a user, determining a node representing the user, collecting data pushed to the node from other nodes, pulling data via the node from other nodes, and combining the collected pushed data and the pulled data based on the search request. By combining explicit, pushed data and implicit, pulled data, the method enables each user to retrieve the most relevant data of other online content of the online service.

According to another embodiment, the search request includes one or more tags and said combining includes matching the collected pushed data and the pulled data with the one or more tags.

In a further embodiment, said pulling the data includes restricting the data pulled via an edge based on the relationship indicated by the edge.

In a further embodiment, said pulling the data includes restricting the data pulled from a node based on privacy settings of the node. Both the edge restrictions and the node restrictions alone or in combination may also be used to restrict pushing of data.

According to another embodiment, the method further includes automatically recording a trace of data related to one or more activities of a user of the online service.

According to an embodiment, said pushing includes automatically pushing at least some data of the trace to other users via the social graph.

According to a further embodiment, said pulling includes pulling at least some data of the trace by another user via the social graph in response to a request of the other user.

In addition, according to another aspect of the present disclosure, a computer-readable medium having instructions stored thereon is provided, wherein said instructions, in response to execution by a computing device, cause said computing device to automatically perform a method according to an embodiment of the present disclosure.

In particular, the method may comprise any combination and individual features of each described embodiment. For example, said computing device may correspond to a computing device of a system according to embodiments of the present disclosure and may perform a method for distributing data related to online content of an online service, wherein relationships between online contents of the online service are represented by a social graph comprising a plurality of nodes each representing an online content item of the online service, and a plurality of edges each connecting two nodes of the plurality of nodes and indicating a relationship between the two online content items represented by the two nodes, wherein in response to the instructions, the computing device may be configured to push data related to an online content item via a node representing the online content item to connected nodes, and pull data related to further online content via a node from connected nodes representing the further online content.

The computer-readable medium may be accessible by the computing device, for example, a processing component of a system according to an embodiment of the present disclosure, which may access the computer-readable medium and read the instructions thereon. The instructions may be stored in a memory of the computing device and may configure the computing device to perform respective processing steps of a method according to an embodiment of the present disclosure.

According to one embodiment, the online service is a social network. For example, the social graph according to an embodiment may be utilized for representing users and media content of the social network. Similarly, the system according to an embodiment may host the social network and the social graph may be configured to represent users and media content of the social network. Also, the method according to an embodiment may be for distributing data related to online content of the social network.

Furthermore, the system and the social graph according to embodiments of the present disclosure may include data structures, components, or modules which may be configured to perform any of the processing steps of a method according to an embodiment of the present disclosure in any combination.

### DESCRIPTION OF THE DRAWINGS

Specific features, aspects and advantages of the present disclosure will be better understood with regard to the following description and accompanying drawings where:
FIGURE 1 shows a schematic overview of a social network using a social graph according to one embodiment;
FIGURE 2 depicts a unified social graph according to another embodiment; and
FIGURE 3 shows a method for distributing data related to users according to one embodiment.

### DETAILED DESCRIPTION

In the following description, reference is made to the drawings which show, by way of illustration, various embodiments. Also, various embodiments will be described below by referring to several examples. It is to be understood that the embodiments may include changes in design and structure without departing from the scope of the claimed subject matter.

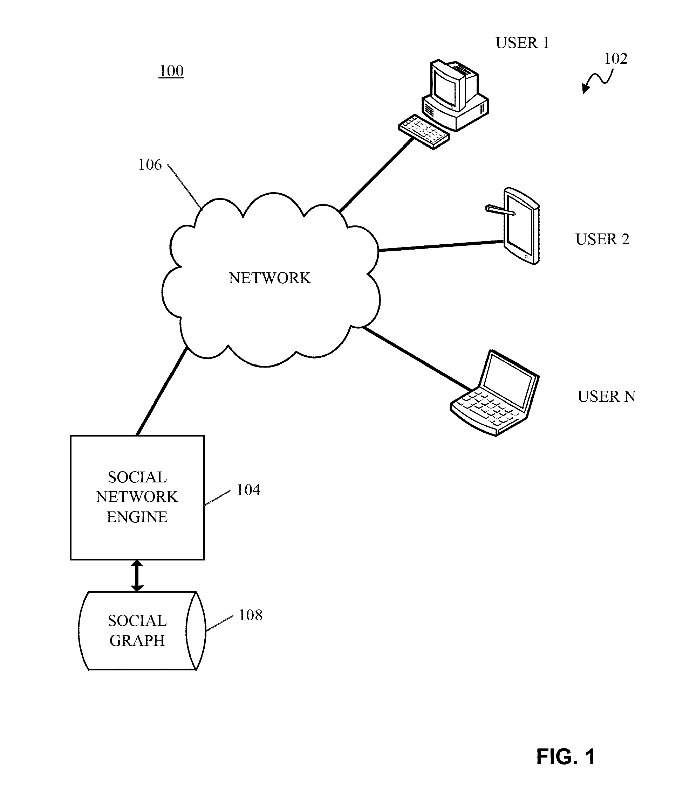

Online services, such as social networks, gaming environments, cloud-based services, as well as user networks, gaming networks, online platforms, online systems, communication and networking sites, and other systems and interfaces, which may be accessible via a network by a plurality of users operating client devices or other remote terminals, enable users to share online content within the online service and participate in activities provided by the online service. FIGURE 1 shows a schematic overview of a respective social network 100 using a social graph according to one embodiment. The social network 100 may enable a plurality of users 102, such as user 1, user 2, and user N, to connect to a social network engine 104 via a network 106. For example, each user 102 may be connected via a client device with at least one server of the social network engine 104. The users 102 may utilize different computing or terminal devices, such as a personal computer, a tablet PC, a laptop, a mobile phone, a smartphone, or any other computing device. Each client device may include a network interface to connect to the network 106 and to establish a connection to the social network engine 104. Even though the users 102 may be remote and at different physical locations, they still may be located at one virtual location provided by the social network 100.

The social network engine 104 may be implemented on one or more computing devices, such as individual servers or interconnected servers (e.g., a "server farm"), which may be locally connected or distributed across remote locations. Distributed computing devices may be connected via another network (not shown) or via the network 106. The social network engine 104 may include at least one network interface to connect to the network 106, enabling respective connections by the users 102.

The social network engine 104 or the respective server may provide each user 102 with one or more interfaces that may be provided or displayed on the client device or terminal and allow the user to interact with the social network 100. For example, a server may generate a personalized page which may be rendered on the client device of the user. Accordingly, the social network engine 104 may include at least one processing component, which may provide a personalized environment to each user 102 representing their view of the social network 100, such as a profile or other personalized pages, which may be set up by the respective user. For example, the user may define certain preferences, filters, and other information to customize his or her personalized environment of the social network 100. Also, the user may upload online content and define relationships with other users. The user may utilize any interaction technique and/or input device available on their client device, such as a mouse, keyboard, gesture interface, or touch interface. The interaction input may be transferred to the social network engine 104 where it may be further processed in order to initiate a respective processing, action, or activity. Also, the input may be processed on the client device in order to provide the social network engine 104 with commands or instructions and how to further proceed.

Each user of the social network 100 may define relationships with other users of the social network 100, for example, by indicating that another user is a "friend," "family," "associate," or another suitable indication of a relationship between two users. For example, user 1 may specify that user 2 is a "friend" of user 1. The social network engine 104 may process this information and store the respective data in a social graph 108.

In addition, the social network engine 104 may track any activities of users 102 within the social network 100 and store the user-related data. In order to distribute the data, the social network engine 104 or a corresponding component may select at least some of the data, such as explicit data which are to be published in the social network 100 and use an interface of the social graph 108 to provide the recorded data to other users. Similarly, the social network engine 104 or a respective component may enable users 102 of the social network 100 to retrieve further data related to other users via the social graph 108, such as implicit data, which would not be automatically published by the social network engine 104 or a respective component via the social graph.

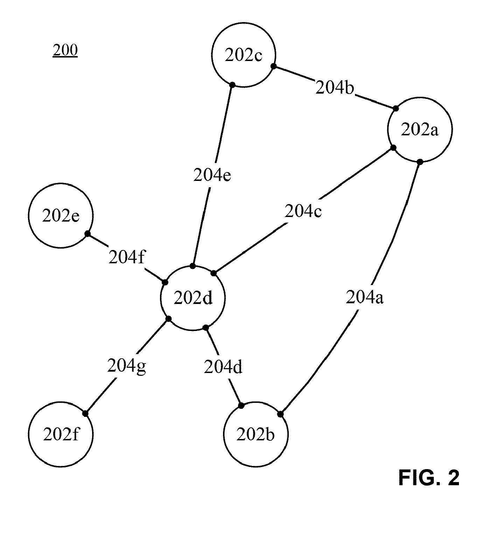

FIGURE 2 shows a unified social graph according to one embodiment. The unified social graph 200 may include a plurality of nodes, such as nodes 202a, ... , 202f, which may be interconnected via directed or undirected edges, such as edges 204a, ... , 204g. Each node 202a, ... , 202f of the unified social graph 200 may represent online content, such as media content or a representation of a user of a social network, for example, one of the users 102 of FIGURE 1. The edges 204a, ... , 204g may represent relationships between the online content items. For example, the edge 204a between nodes 202a and 202b may indicate that the users represented by nodes 202a and 202b, respectively, are "friends." Similarly, as indicated by edges 204b and 204c, the users represented by nodes 202c and 202d may also be "friends" of the user represented by node 202a. The unified social graph 200 may expose an interface (not shown) to a social network or online service in order to enable a processing component of the social network or online service to push user-related data and to pull further user-related data via the social graph 200.

For example, the social network may track activities of the user represented by node 202a, generate respective data related to these activities, and store the data. A processing component of the social network or online service may retrieve the data, access the social graph 200 at node 202a, and use the social graph 200 to publish at least some of the recorded data within the social network, for example, by pushing the data to connected nodes, such as nodes 202b, 202c, 202d. The social graph 200 may first determine connected edges and nodes, for example, by analyzing an adjacency matrix of the graph 200, retrieve privacy settings defined with regard to node 202a, check the privacy settings, retrieve restrictions defined by the connected edges 204a, 204b, 204c, and push the data to nodes 202b, 202c, and 202d in accordance with the privacy settings and restrictions. According to an example, the data may also be further pushed to further nodes related to the connected nodes 202b, 202c, and 202d, such as nodes 202e and 202f. Hence, all users related to the user represented by the node 202a, such as all friends of the user, may be informed about all activities of the user via the social graph 200 by pushing data.

Further to pushing data, the social graph 200 may also be used to pull further data related to other online content. In this context, pushing data corresponds to a situation where a user, such as the user represented by node 202a, shares explicit content with other users, such as the users represented by node 202b, 202c, and 202d. Since pushing of data may be performed explicitly, users of the social network may typically receive data because someone else pushed it to them. Pulling of data via the social graph 200 may further be used to retrieve implicit data related to other online content. For example, the user represented by node 202a may receive explicit data pushed by users represented by nodes 202b, 202c, and 202d and, therefore, may always be informed about explicit activities of these users connected to him or her. In addition, the user represented by node 202a may access the social graph 200 and utilize an interface of the social graph 200 to pull any implicit data related to connected users, such as the users represented by nodes 202b, 202c, and 202d, via the node 202a, which may also include data related to online content represented by the nodes 202e and 202f.

By unifying the pull and push directions within a single unified social graph 200, a user is allowed to get the most relevant data related to connected users and online content. For example, when a user pushes explicit data to other users via the social graph 200, they also want to be able to look at the activities done by the other users. The user may formulate a search request for a particular topic, item, tag or interest, such as a particular game, and the results of the search may be retrieved via the respective connections as defined by the social graph 200. For example, by getting all relevant data related to the search via the social graph 200, the user searching for the latest game will be able to retrieve matches based on the latest games explicitly and implicitly played by friends of the user or other connected users. For example, user 1 may play a game, for example, Crysis, and another user, such as user 2, may search for the game. Accordingly, the search result will include any information related to the game, including explicit data of other users pushed to the user via the social graph 200, as well as implicit data of other users pulled by the user via the same social graph 200.

While explicit data may be directly pushed by a user or automatically pushed by the social network or a respective component, the social network may derive and store implicit data from an activity-based profiling of each user. As soon as a user does something, an activity list may be generated. This data may not be directly published within the social network, for example, by pushing the data using the social graph 200. However, other users may retrieve the data by pulling the data via the social graph 200, such as by formulating a search request directed at the activity.

Each edge 204a, ... , 204g of the social graph 200 may include information describing the particular relationship between the online content items represented by the connected nodes. For example, edges 204a, 204b, and 204c may include information that the users represented by nodes 202b, 202c, 202d are friends of the user represented by node 202a. In addition, edge 204f may include information that a user represented by node 202e is a family member of the user represented by node 202d. Also, edge 204g may include information that the user represented by node 202d is an owner or creator of a media content represented by the node 202f. Furthermore, the social graph 200 may store within each node 202a, ... , 202f privacy settings defined by a respective user. The information related to edges 204a, 204g, or the privacy settings related to nodes 202a, ... , 202f, as well as a combination of both, may be used to control retrieval of implicit data via pulling by other users and distribution of explicit data via pushing. The social network or a respective component may access the social graph 200 and may retrieve the information related to the edges 204a, ... , 204g in a first step. If an edge 204a, ... , 204g does not comply with access restrictions, i.e., if the relationship indicated by the edge 204a, ... , 204g is not sufficient, pulling and pushing of data via this edge 204a, ... , 204g may be directly terminated and the social network or the respective component may proceed with the next edge and node. Yet, if the access restrictions are satisfied, the social network or the respective component may retrieve the privacy settings of the node connected via the edge and may determine if the user is authorized to distribute or retrieve data to the node. Hence, the processing based on the social graph 200 may be restricted by the relationships between the users as well as the privacy settings individually defined for each node 202a, ... , 202f, leading to an enhanced control of the user over distribution of their data to other users.

Online content items may be provided in a data structure such as a container or "seed," which may be used to represent the online content throughout the online service, enabling a unified management and handling of the online content. A seed refers to a container for online content, which may be used to represent content data within the online service, a related cloud, or a server environment in a way, which enables a unified management and handling of the content data. Each seed stores the respective online content, as well as basic parameters or metadata and additional parameters or metadata. A seed may be persistent in time and may grow in size.

The metadata attached to each seed may define who is allowed to interact with the seed, what the seed is allowed to do, who created the seed, and other information for handling and interacting. A respective management system may, therefore, analyze the metadata in order to determine suitable actions for the seed, which may be automatically provided to users of the online system in conjunction with the seed.

Basic parameters or metadata of a seed may include at least one of a unique ID, an identification of a user, who created the seed, as well as a list of recipients that may be other seeds addressed by the seed, such as a single recipient seed or a group of recipient seeds, an indication of the type of the seed, as well as an indication of actions which are assigned to the seed, such as social or content-based actions, and combinations thereof. Further basic parameters may include an identification of an owner, which may be the current user managing the seed, link and connect permissions, a status of the seed within the online system, a future date, which may define when the seed will be visible online, an expiration date, other suitable information, and combinations thereof.

Each seed may explicitly allow particular users to perform certain actions as defined by the basic parameters, for example, content actions directed at a use of the seed content, and social actions directed at an initiation of social interactions with the seed.

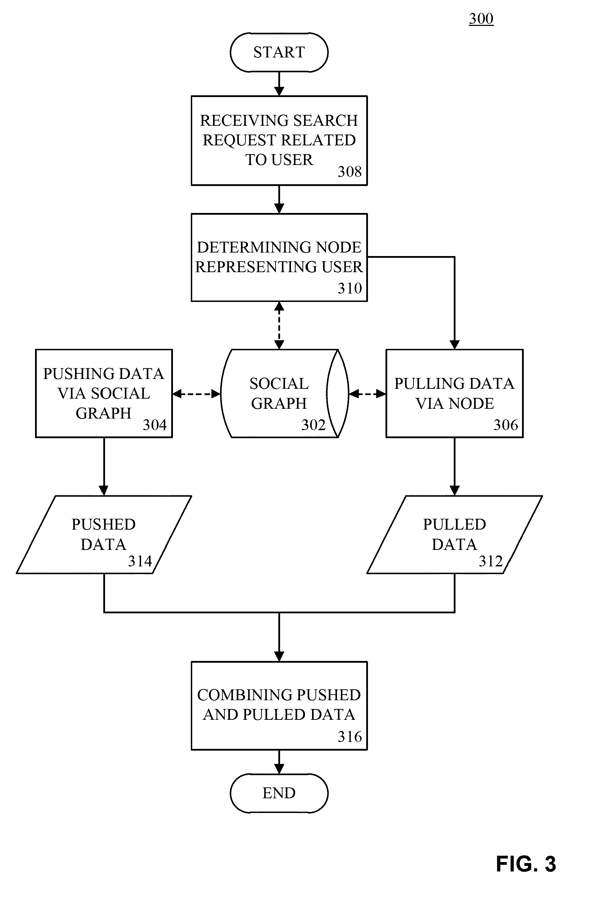

FIGURE 3 shows a flow chart of a method directed at distributing of data within a social network according to one embodiment. The method 300 may utilize relationships between users of the social network, which may be represented by a social graph 302. The social graph 302 may comprise a plurality of nodes, each representing a user or other online content of the social network, and a plurality of edges, each connecting two nodes of the plurality of nodes and each indicating a relationship between the two online contents represented by the two nodes, similar to the social graph 200 shown in FIGURE 2.

The social network or a respective processing component may access the social graph 302, as indicated by the dotted line between blocks 302 and 304, and may push data related to an online content item via a node of the social graph 302 representing the online content item to connected nodes representing other online content items, in accordance with the relationships between the online content item and the other online content items, in block 304. The social graph 302 may also enable the social network or the respective processing component to access the social graph 302, as indicated by the dotted line between blocks 302 and 306, and to pull data related to further online content via a node representing an online content item from connected nodes representing the further online content, in block 306. For example, the social network may perform said pushing of data at block 304 automatically, as soon as new explicit data is available for one of the online content items of the social network. Also, a user may explicitly trigger the processing at block 304. Similarly, said pulling of data in block 306 may be done upon request by one of the users. However, according to other examples, the social network or the respective processing component may also automatically pull implicit data for certain online content items, such as users which, for example, may be on-line or which may participate in certain activities.

According to the method 300, a search request related to a user may be received at block 308. The search requests may, for example, include one or more tags or any other information suitable for defining a data search of a user. Thereafter, a node representing the user as indicated by the search may be determined in block 310. In order to retrieve the node, the social network or a respective processing component may access the social graph 302, as indicated by the dotted line between blocks 302 and 310.

The method 300 may continue with said pulling of implicit data via the determined node at block 306, resulting in pulled implicit data 312. Furthermore, the method 300 may retrieve pushed explicit data 314, which have been previously pushed to the node at block 304 and collected with regard to the node. The method 300 may continue by combining the pushed 314 and pulled 312 data at block 316. For example, the combined data may be matched with the one or more tags or the further information specified in the search request in order to determine the most relevant data for the user. Accordingly, the matched combined data may be returned to the user or may be further processed and enhanced, for example, with additional information, and thereafter returned to the user.

While some embodiments have been described in detail, it is to be understood that the aspects of the disclosure can take many forms. In particular, the claimed subject matter may be practiced or implemented differently from the examples described and the described features and characteristics may be practiced or implemented in any combination. The embodiments shown herein are intended to illustrate rather than to limit the invention as defined by the claims.

## Claims

1. A social graph for representing online content of an online service, wherein the social graph comprises:
a plurality of nodes, each representing one online content item of the online service;
a plurality of edges, each connecting two nodes of the plurality of nodes and each indicating a relationship between two online content items represented by the two nodes;
and
a unified interface configured to allow access to the plurality of nodes and, for a node representing an online content item, to allow pushing of data related to the online content item via the node to connected nodes and to allow pulling of data related to further online content via the node from connected nodes representing the further online content.

2. The social graph according to claim 1, wherein the unified interface includes a push interface and a pull interface.

3. The social graph of claim 1 or 2, wherein the unified interface is further configured to receive a search request related to a user, to determine a node representing the user, to collect data pushed to the node from other nodes, to pull data via the node from other nodes, and to combine collected pushed data and pulled data based on the search request, wherein the search request includes one or more tags and said combining includes matching the collected pushed data and the pulled data with the one or more tags.

4. The social graph according to one of the preceding claims, wherein data pulled via an edge are restricted based on a relationship indicated by the edge.

5. The social graph according to one of the preceding claims, wherein the social graph further comprises privacy settings associated with at least one node, wherein data pulled from the at least one node are restricted based on privacy settings of the node.

6. The social graph according to one of the preceding claims, wherein the data related to the online content item are indicative of an activity of a user provided by the online service.

7. The social graph according to one of the preceding claims, wherein the edges comprise directed edges.

8. A computer-readable storage medium having stored thereon computer executable instructions which, when executed, cause a computer system to implement a social graph according to one of the preceding claims.

9. A system hosting an online service, comprising:
a social graph for representing online content of the online service, wherein the social graph comprises:
a plurality of nodes, each representing one online content item of the online service,
a plurality of edges, each connecting two nodes of the plurality of nodes and
each indicating a relationship between two online content items represented by the two nodes, and
a unified interface configured to allow access to the plurality of nodes and, for a node representing an online content item, to allow pushing of data related to the online content item via the node to connected nodes and to allow pulling of data related to further online content via the node from connected nodes representing the further online content; and
a processing component configured to maintain the social graph.

10. The system of claim 9, further including means for automatically recording a trace of data related to one or more activities of a user of the online service in response to performing the one or more activities by the user, wherein the processing component is further configured to automatically push at least some data of the trace to other users via the social graph, and to pull at least some data of the trace via the social graph in response to a request of another user.

11. The system of claim 9 or 10, wherein the online service is a social network.

12. A method for distributing data related to online content of an online service, said method including:
pushing data related to an online content item via a node representing the online content item to connected nodes, wherein relationships between online content items of the online service are represented by a social graph comprising a plurality of nodes each representing an online content item of the online service, and a plurality of edges each connecting two nodes of the plurality of nodes and each indicating a relationship between the two online content items represented by the two nodes; and
pulling data related to further online content via a node from connected nodes representing the further online content.

13. The method of claim 12, further including:
receiving a search request related to a user;
determining a node representing the user;
collecting data pushed to the node representing the user from other nodes pulling data via the node representing the user from other nodes; and
combining the collected pushed data and the pulled data based on the search request,
wherein the search request includes one or more tags and said combining includes matching the collected pushed data and the pulled data with the one or more tags.

14. The method of claim 12 or 13, wherein said pulling the data includes restricting the data pulled via an edge based on the relationship indicated by the edge, and/or wherein said pulling the data related to further online content includes restricting the data pulled via the node representing the further online content based on privacy settings of the node representing the further online content.

15. The method according to one of the claims 12 to 14, further including automatically recording a trace of data related to one or more activities of a user of the online service, wherein said pushing includes automatically pushing at least some data of the trace to other users via the social graph, and wherein said pulling includes pulling at least some data of the trace by another user via the social graph in response to a request of the other user.
